# EUROPÄISCHE PATENTSCHRIFT

(11) **EP 0 802 016 B1**
(45) Veröffentlichungstag und Bekanntmachung des Hinweises auf die Patenterteilung: **05.04.2000**
(21) Anmeldenummer: 97101077.2
(22) Anmeldetag: 24.01.1997
(51) Int. Cl.: B23Q 1/00

(54) **Werkzeugmaschine mit einem Drehtisch**
Machine tool with rotating table
Machine-outil avec table tournante

(30) Priorität: 19.04.1996 DE 19615425
(43) Veröffentlichungstag der Anmeldung: 22.10.1997
(73) Patentinhaber: CHIRON-WERKE GMBH & CO. KG, 78532 Tuttlingen (DE)
(72) Erfinder: Schweizer, Anton, 78573 Wurmlingen (DE); Grund, Peter, Dr., 78647 Trossingen (DE)
(74) Vertreter: Otten, Hajo, Dr.-Ing.

(56) Entgegenhaltungen:
- EP-A- 0 564 842
- DE-A- 4 038 660
- DE-U- 8 316 776
- US-A- 2 911 767
- US-A- 3 170 375
- WERKSTATTSTECHNIK, ZEITSCHRIFT FUR INDUSTRIELLE FERTIGUNG, Bd. 68, Nr. 2, Februar 1978, BERLIN DE, Seiten 73-75, XP002034060 J. FEULNER: "Druckölversorgung hydraulischer Spannelemente auf schwenk- und drehbaren EInrichtungen"

## Beschreibung

Die vorliegende Erfindung betrifft eine Werkzeugmaschine mit einem Drehtisch, der eine gegenüber einem Maschinengestell um eine Drehachse verschwenkbare Tischplatte aufweist, auf deren Oberseite von unterhalb der Tischplatte kommende Leitungen führen, die mit raumfesten Versorgungsanschlüssen verbunden sind, wobei die Leitungen über nach unten weisende Anschlußstücke, die mit der Tischplatte in deren mittleren Bereich drehfest verbunden sind, von unten an der Tischplatte befestigt sind.

Eine derartige Werkzeugmaschine ist aus der DE 40 38 660 A1 bekannt.

Bei der bekannten Werkzeugmaschine sitzt der Drehteller auf einem Kupplungskolben, der seinerseits an seinem unteren Ende mit einer Dreh- und Hubvorrichtung für den Drehteller verbunden ist. Der Kupplungskolben wird von Druckkanälen durchsetzt, die unten am Druckkolben, also im Bereich der Dreh- und Hubvorrichtung, mit Anschlußschläuchen verbunden sind, die seitlich abgehen.

Bei einer aus der DE 83 16 776 U1 bekannten Werkzeugmaschine ist ein Anschlußkasten fest auf dem Drehtisch montiert. In einer drehfest mit dem Drehtisch verbundenen Seitenwand des Anschlußkastens sind Steckanschlüsse vorgesehen, während auf der gegenüber dem Drehtisch feststehenden Oberseite des Anschlußkastens eine Drehkupplung angeordnet ist.

Der die Oberseite bildende Deckel des Anschlußkastens ist mit einem durch den Tisch hindurchgehenden Rohr verbunden, das raumfest ist, also der Drehung des Tisches nicht folgt. In dem Rohr verlaufen Anschlußleitungen von unten nach oben, von denen eine von unten an die Drehkupplung angeschlossen ist. Von der Drehkupplung kann über die Anschlußleitung zugeführtes Fluid über eine weitere Leitung abgenommen werden. Wenn sich der Tisch dreht, bleibt das Oberteil des Anschlußkastens stehen, während sich die Leitung zur Abnahme des Fluids über die Drehkupplung mit dem Tisch mitdreht. Diese Drehung ist laut dieser Druckschrift deshalb möglich, weil die Drehkupplung zentrisch in der Drehachse des Drehtisches liegt.

Die Steckanschlüsse in der sich mit dem Tisch mitdrehenden Seitenwand des Anschlußkastens sind mit Leitungen verbunden, die im Inneren des Anschlußkastens ggf. in mehrlagigen Schlaufen verlegt sind, so daß sie mit entsprechendem Spiel oder Freiraum das Verdrehen des Drehtisches ermöglichen, wobei sich die Schlaufen ab- oder aufwickeln.

Ein derartiger Drehtisch wird bei Werkzeugmaschinen eingesetzt, bei denen auf der Oberseite des Drehtisches zumindest zwei Werkstücke angeordnet sind, die durch Verdrehen der Tischplatte nacheinander einer Spindel zur Bearbeitung angeboten werden. Die Leitungen führen Bohr- und Spülöl, Hydrauliköl oder Druckluft auf die Oberseite des Drehtisches, um dort zur Betätigung einer Werkstückaufnahme, zum Spülen während der Werkstückbearbeitung etc. verwendet zu werden. Diese Fluide werden an raumfesten Versorgungsanschlüssen bereitgestellt, die über die Leitungen mit der Oberseite der sich drehenden Tischplatte verbunden werden.

Bei der bekannten Werkzeugmaschine ist eine zentrisch zu der Drehachse der Tischplatte verlaufende Leitung mit der Drehkupplung verbunden, während die außerhalb der Drehachse verlaufenden Leitungen auf der Tischplatte innerhalb des Anschlußkastens in Schlaufen gelegt sind. Auf diese Weise können sowohl in der Drehachse als auch außerhalb der Drehachse Leitungen auf die Oberseite der Tischplatte führen und dort die benötigten Fluide bereitstellen.

In der Praxis hat sich gezeigt, daß der Anschlußkasten bei der bekannten Werkzeugmaschine insofern von Nachteil ist, als er auf dem Werkstücktisch relativ viel Platz erfordert, so daß der Raum zum Aufspannen der Werkstücke durch den Anschlußkasten merklich verringert wird. Nun ist es aber ein Bestreben bei der Konstruktion derartige Werkzeugmaschinen, diese mit möglichst geringen Außenabmaßen auszulegen, so daß der Platz auch auf der Tischplatte des Drehtisches möglichst gut ausgenutzt werden soll. Diesen Anforderungen wird die bekannte Werkzeugmaschine nicht gerecht.

Ein weiterer Nachteil bei der bekannten Werkzeugmaschine besteht darin, daß die aus Anschlußkasten und Rohr bestehende Mechanik relativ aufwendig und damit sehr kostenintensiv ist.

Nun ist es aus der DE 36 20 086 C2 bereits bekannt, das oben erwähnte Platzproblem dadurch zu lösen, daß die Leitungen oberhalb des Werkstücktisches an einem Punkt in der Nähe der Drehachse an einem raumfesten Punkt der Werkzeugmaschine angeschlossen und lose nach unten hängend mit einem Anschlußkasten auf dem Werkstücktisch verbunden sind.

Da die Leitungen oben in der Nähe der Drehachse der Tischplatte angeschlossen sind, ergibt sich eine symmetrische und die Leitungen nur minimal mechanisch verformende Bewegung, wenn der Werkstücktisch jeweils um 180° hin- und hergedreht wird.

Bei diesen frei herabhängenden Leitungen ist jedoch von Nachteil, daß sie zum einen mechanisch beschädigt werden können und zum anderen ständig dem Einfluß von Kühl- und Spülmitteln ausgesetzt sind, die einen aggressiven Einfluß auf die Kunststoff- und Gummiisolierungen der Leitungen ausüben. Darüber hinaus stören die herabhängenden Leitungen, wenn Bedienungspersonal im Bereich des Drehtisches Montage- oder Wartungsarbeiten durchführen muß.

Hiervon ausgehend ist es Aufgabe der vorliegenden Erfindung, die eingangs genannte Werkzeugmaschine derart weiterzubilden, daß bei einfachem konstruktivem Aufwand der Anschluß auch mehrerer Leitungen an die sich drehende Tischplatte möglich ist.

Bei der eingangs genannten Werkzeugmaschine wird diese Aufgabe erfindungsgemäß dadurch gelöst, daß die Anschlußstücke an einem Adapterteller befestigt sind, der von oben auf einen in der Oberseite der Tischplatte mündenden zentralen Kanal aufgesetzt ist, in den die Anschlußstücke hineinragen, und daß die Leitungen frei nach unten hängen.

Die der Erfindung zugrunde liegende Aufgabe wird auf diese Weise vollkommen gelöst.

Bei der neuen Werkzeugmaschine ist nur ein geringer konstruktiver Aufwand erforderlich, um die Verbindung zwischen den Leitungen und der Tischplatte herzustellen. Es müssen lediglich unten an der Tischplatte Anschlußstücke befestigt werden, an denen wiederum dann die Leitungen montiert werden.

Die Anschlußstücke können an dem Adapterteller zusammen mit den Leitungen vormontiert werden, die dann nur noch von oben in den Kanal "eingefädelt" werden müssen. Der Durchmesser des Kanales muß lediglich so groß sein, daß sämtliche Anschlußstücke in ihn eingeführt werden können, im Inneren des Kanales selber sind keine Montagearbeiten erforderlich. Bei dieser Konstruktion ist auch eine leichte Wartung möglich, der Adapterteller muß lediglich abgeschraubt und soweit hochgezogen werden, daß auf die Anschlußstücke zugegriffen werden kann, um z.B. eine defekte Leitung auszutauschen.

Dabei ist es bevorzugt, wenn zumindest eine der Leitungen eine derartige frei hängende Länge aufweist, die beim Hin- und Herdrehen der Tischplatte ein Verwinden der Leitung zuläßt.

Hier ist von Vorteil, daß die Anschlußstücke einfache Verschraubungen sein können, mit denen die Leitungen unmittelbar fest von unten an die Tischplatte angeschraubt werden. Die Erfinder der vorliegenden Anmeldung haben nämlich erkannt, daß auch mehrere auf engem Raum nebeneinander hängende Leitungen ein Hin- und Herdrehen der Tischplatte um 180° dann ermöglichen, wenn sie über eine entsprechende Länge frei herunterhängen, so daß ein Verwinden der Leitungen möglich ist. Bisher war angenommen worden, daß ein derartiges Verwinden der Leitungen nur möglich ist, wenn diese von oben frei auf die Tischplatte herunterhängen, so daß sie oberhalb der Tischplatte genügend Platz haben, um sich umeinander zu drehen, wie dies aus der eingangs genannten DE 36 20 086 C2 bekannt ist.

Andererseits ist es bevorzugt, wenn zumindest ein Anschlußstück eine Drehkupplung umfaßt.

Hier ist von Vorteil, daß insbesondere bei außermittig angeordneten Leitungen deren Verwinden dadurch erleichtert wird, daß die Leitung von unten über eine Drehkupplung an der Tischplatte befestigt ist. Die Erfinder der vorliegenden Anmeldung haben hier erkannt, daß derartige Drehkupplungen auch unterhalb der Tischplatte und außerhalb der Drehachse in vorteilhafter Weise angeordnet werden können, um auf geringem Raum mehrere Leitungen nebeneinander von unten durch die Tischplatte auf deren Oberseite zu führen. Ein weiterer Vorteil liegt hier darin, daß die Leitungen kürzer sein können, als dies bei frei hängenden Leitungen der Fall ist.

Aus der eingangs genannten DE 83 16 776 U1 war bisher nur bekannt, derartige Drehkupplungen in der Drehachse des Drehtisches anzuordnen und sie dazu auf einem sich nicht mit der Tischplatte drehenden Deckelteil des Anschlußkastens zu montieren. Zur Erleichterung der Verwindung der Leitungen war die Drehkupplung bei der bekannten Konstruktion nicht vorgesehen.

Weiter ist es bevorzugt, wenn eine erste Leitung etwa zentrisch zu der Drehachse verläuft und weitere Leitungen vorzugsweise symmetrisch zu der ersten Leitung angeordnet sind.

Bei dieser Konstruktion kann z.B. die erste Leitung über eine Schraubverbindung mit der Tischplatte verbunden sein, während die weiteren Leitungen über Drehkupplungen an der Unterseite der Tischplatte montiert sind. Wegen der symmetrischen Anordnung ist hier nur sehr wenig Platz erforderlich, auf die Oberseite der Tischplatte münden so z.B. vier Anschlußzapfen, die in den Ecken eines Quadrates angeordnet sind, während mittig in dem Quadrat ein weiterer Anschlußzapfen hochsteht.

In einer Weiterbildung ist es hier bevorzugt, wenn der Adapterteller eine zentrische Durchgangsbohrung aufweist, in die für eine zentrisch zu der Drehachse verlaufende Leitung ein Anschlußstück eingefügt ist, das einen fest in der Durchgangsbohrung sitzenden, zylindrischen Bolzenkörper mit endseitigen Anschlußzapfen aufweist.

Auch diese Maßnahme ist im Hinblick auf geringen Platzbedarf von Vorteil, nach der Befestigung der Leitung an einem der endseitigen Anschlußzapfen muß lediglich noch der Bolzenkörper von unten in die Durchgangsbohrung eingefügt werden. Der Platzbedarf dieser Verbindung ist sehr gering, da keine Verschraubung am Adapterteller verwendet wird. Es ist jetzt z.B. möglich, vier außerhalb der Drehachse verlaufende Leitungen über Verschraubungen an dem Adapterteller zu befestigen und in der Mitte lediglich so viel Platz auszusparen, daß die Durchgangsbohrung frei bleibt. Nachdem die äußeren Leitungen montiert wurden, muß lediglich noch der Bolzenkörper mit daran befestigter zentrischer Leitung von unten eingeschoben werden. Insgesamt führt diese Konstruktion also auch dazu, daß ein Adapterteller mit sehr geringem Außendurchmesser verwendet werden kann, so daß insgesamt der Platzbedarf auf der Oberseite der Tischplatte sehr gering ist.

In einer Weiterbildung ist es dann bevorzugt, wenn die Anschlußstücke der weiteren Leitungen Drehkupplungen umfassen, die von unten über eine Schraubverbindung an dem Adapterteller befestigt sind.

Die Drehkupplungen weisen den oben bereits erwähnten Vorteil auf, daß für die Leitungen insgesamt nur sehr wenig Platz erforderlich ist, um ihnen das Verwinden bei dem Hin- und Herdrehen der Tischplatte um 180° zu ermöglichen. Insbesondere im Zusammenhang mit dem zuvor erwähnten Bolzenkörper läßt sich so auf sehr geringem Platz ein Anschluß von z.B. fünf Leitungen an die Tischplatte ermöglichen.

In einer Weiterbildung ist es dann bevorzugt, wenn der Bolzen mit dem Adapterteller verstiftet ist.

Hier ist von Vorteil, daß nach dem Einfügen des Bolzens durch die Verstiftung dafür gesorgt wird, daß dieser sich gegenüber der Tischplatte nicht verdrehen kann. Dies wird auf konstruktiv denkbar einfache Weise durch eine Verstiftung ermöglicht.

Ferner ist es bevorzugt, wenn parallel zu der Drehachse von oben ein Stift in den Adapterteller eingeschoben ist, der etwa je zur Hälfte in dem Bolzenkörper und dem Adapterteller sitzt.

Hier ist von Vorteil, daß es sich um eine konstruktiv sehr einfache Verstiftung handelt, das den Stift aufnehmende Loch, das etwa je zur Hälfte in dem Bolzenkörper und in dem Adapterteller sitzt, kann nach dem Einfügen des Bolzenkörpers gebohrt werden, so daß sich die Montage insgesamt sehr vereinfacht. Beim Einfügen des Bolzenkörpers muß nämlich nicht bereits darauf geachtet werden, daß die beiden Hälften der für den Stift vorgesehenen Bohrungen miteinander fluchten. Diese Maßnahme hat auch Vorteile gegenüber einem Stift, der quer zu der Drehachse eingeschoben wird, weil auch bei einer derartigen Konstruktion schon beim Einfügen des Bolzenkörpers darauf geachtet werden müßte, daß die für den Stift vorgesehenen Löcher in Bolzenkörper und Tischplatte miteinander fluchten.

Darüber hinaus ist es bevorzugt, wenn der Bolzenkörper in die Durchgangsbohrung eingeklebt ist.

Bei dieser Maßnahme ist von Vorteil, daß der Bolzenkörper auf einfache Weise axial unverschieblich gehalten werden kann.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: einen Längsschnitt durch einen Drehtisch der neuen Werkzeugmaschine;
- Fig. 2: eine Draufsicht auf einen Adapterteller, wie er bei dem Drehtisch aus Fig. 1 verwendet werden kann; und
- Fig. 3: einen Querschnitt längs der Linie III-III aus Fig. 2 durch ein weiteren Ausführungsbeispiel des Drehtisches der neuen Werkzeugmaschine.

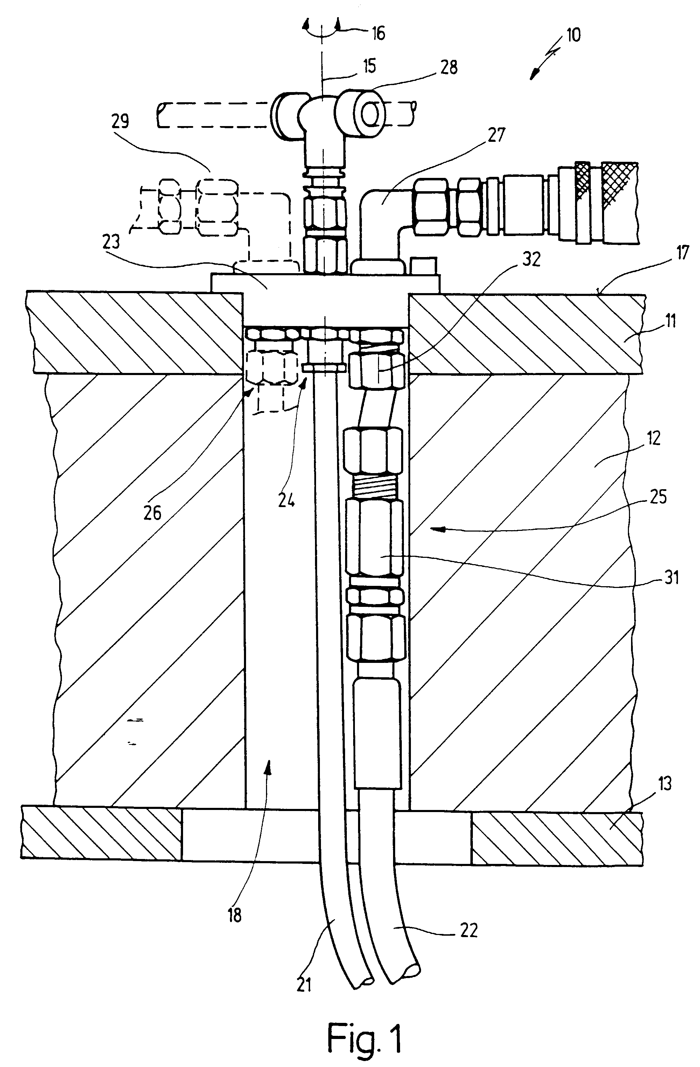

In Fig. 1 ist mit 10 ein Drehtisch einer ansonsten nicht dargestellten Werkzeugmaschine gezeigt. Der Drehtisch 10 weist eine Tischplatte 11 sowie ein Tischgehäuse 12 auf, das drehfest mit einem Maschinengestell 13 verbunden ist. Die Tischplatte 11 ist in an sich bekannter Weise um eine Drehachse 15 in Richtung eines Doppelpfeiles 16 gegenüber dem Maschinengestell 13 hin- und herbewegbar.

Derartige Drehtische dienen als Werkstückwechsler, sie bieten einer Spindel der Werkzeugmaschine nacheinander Werkstücke an, die auf ihrer Oberseite 17 in in Fig. 1 nicht dargestellten Aufnahmen eingespannt sind. Zur Betätigung dieser Aufnahmen wird Hydrauliköl oder Druckluft benötigt, wobei zum Spülen und Kühlen während der Bearbeitungsvorgänge weiter Kühl- und Spülöl benötigt wird. Ferner können auf der Oberseite 17 Teilapparate, Meßgeräte etc. angeordnet sein, die fluidisch oder elektrisch betrieben werden.

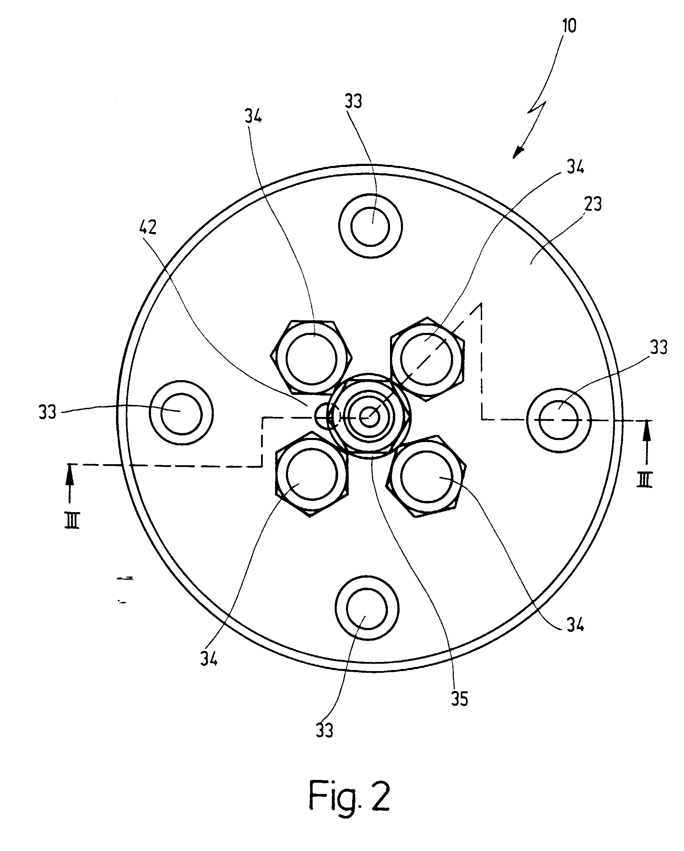

Die Versorgung mit fluidischer und/oder elektrischer Energie erfolgt über einen zentrisch in der Tischplatte 11 sowie dem Tischgehäuse 12 angeordneten Kanal 18, der in der Oberseite 17 mündet. In diesem Kanal verlaufen in Fig. 2 beispielhaft zwei Leitungen 21 und 22, wobei die Leitung 21 eine Druckluftleitung und die Leitung 22 eine Hydraulikleitung ist. Die beiden Leitungen kommen von raumfesten Versorgungsanschlüssen für Fluide.

Oben auf dem Kanal 18 sitzt ein Adapterteller 23, der mit einem Flansch in den Kanal 18 hineinragt. In Fig. 1 sind von unten Anschlußstücke 24, 25 und 26 an dem Adapterteller 23 befestigt. Diesen Anschlußstücken 24, 25 und 26 sind auf der Oberseite 17 ein Winkelstück 27 für einen Hydraulikanschluß, ein T-Stück 28 für einen Pneumatik-Anschluß sowie ein weiteres Winkelstück 29 für einen Hydraulik-Anschluß zugeordnet.

Die Leitung 21 ist fest mit dem Anschlußstück 24 verbunden, so daß sie sich beim Drehen der Tischplatte 11 verwindet. Die frei hängende Länge der zentrisch zu der Drehachse 15 verlaufenden Leitung 21 ist so groß, daß dieses Verwinden in dem relativ engen Kanal 18 möglich ist, ohne daß die Leitung 21 abgedrückt wird.

Im Gegensatz dazu umfaßt das Anschlußstück 24 für die außermittig verlaufende Leitung 22 eine Drehkupplung 31, die über eine Schraubverbindung 32 von unten an den Adapterteller 23 angeschraubt ist. Die Drehkupplung 31 ermöglicht jetzt ein Verdrehen der Leitung 22 gegenüber der Schraubverbindung 32. Beim Drehen der Tischplatte 11 unterstützt die Drehkupplung 31 die erforderliche Verwindung der Leitung 22, so daß dies in dem relativ engen Kanal 18 möglich ist, obwohl die Leitung 22 außerhalb der Drehachse 15 angeordnet ist und selbst relativ kurz sein kann.

Selbstverständlich ist auch dem Anschlußstück 26 eine entsprechende Leitung zugeordnet, die über eine Drehkupplung und eine schematisch angedeutete Schraubverbindung an dem Adapterteller 23 befestigt ist. Aus Gründen der Übersichtlichkeit sind diese Bauteile jedoch in Fig. 1 nicht dargestellt.

Fig. 2 zeigt eine Draufsicht auf eine Adapterplatte 23, die eine geringfügig andere Konstruktion aufweist als die Adapterplatte 23 aus Fig. 1, aber demselben Zweck dient.

Zunächst ist in Fig. 2 zu erkennen, daß in der Adapterplatte 23 vier Maschinenschrauben 33 sitzen, mit denen die Adapterplatte 23 an die Tischplatte 11 angeschraubt ist. Ferner sind vier Schraubanschlüsse 34 zu erkennen, auf die z.B. die Winkelstücke 27 und 29 und/oder das T-Stück 28 aufgeschraubt werden können. Die vier Schraubanschlüsse sitzen in den Ecken eines Quadrates, wobei in der Mitte des Quadrates ein weiterer, mittiger Schraubanschluß 35 vorgesehen ist.

Auf diese Weise ist es möglich, insgesamt fünf Leitungen in dem Kanal 18 zu führen, wobei ein Verdrehen der Tischplatte (um 180° hin und her) 11 dazu führt, daß sich die an den Schraubanschluß 35 angeschlossene Leitung 21 in sich verwindet, während sich die an die äußeren Schraubanschlüsse 34 von unten angeschlossenen Leitungen, wie z.B. die Leitung 22, über die Drehkupplung 31 verdrehen und verwinden können.

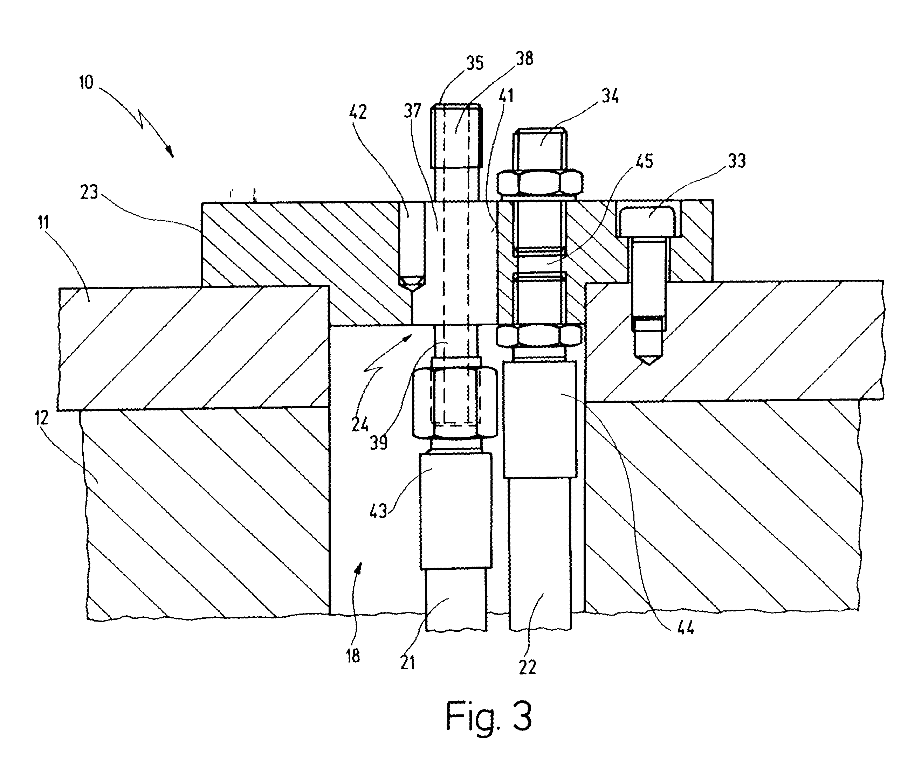

In Fig. 3 ist jedoch ein weiteres Ausführungsbeispiel gezeigt, bei dem auf die Drehkupplung 31 ganz verzichtet wurde. Fig. 3 ist ein Schnitt längs der Linie III-III aus Fig. 2. Aus Gründen der Übersichtlichkeit ist in Fig. 3 lediglich eine Maschinenschraube 33 sowie ein Schraubanschluß 34 und schließlich der Schraubanschluß 35 gezeigt.

Abweichend von der Konstruktion aus Fig. 1 umfaßt das Anschlußstück 24 hier einen zylindrischen Bolzenkörper 37, an den oben und unten jeweils ein Anschlußzapfen 38 bzw. 39 angefügt ist. Der Bolzenkörper 37 ist in eine Durchgangsbohrung 41 eingefügt, die den Adapterteller 23 zentrisch durchsetzt. Der Bolzenkörper 37 ist vorzugsweise in die Durchgangsbohrung 41 eingeklebt.

Zur Unterstützung der Verbindung zwischen Bolzenkörper 37 und Adapterplatte 23 ist ein Stift 42 vorgesehen, der parallel zur Drehachse 15 verläuft und etwa je zur Hälfte in dem Bolzenkörper 37 sowie in dem Adapterteller 23 sitzt.

Auf den unteren Anschlußzapfen 39 ist eine Schraubverbindung 43 aufgeschraubt, über die die Leitung 21 fest mit dem Anschlußstück 24 und damit der Tischplatte 11 verbunden ist.

Die außerhalb der Drehachse 15 verlaufende Leitung 22 ist mittels einer Schraubverbindung 44 in eine Gewindebohrung 45 in dem Adapterteller 23 eingeschraubt. Von oben ist in diese Gewindebohrung 45 der Schraubanschluß 34 eingeschraubt.

In Fig. 3 ist zu erkennen, daß die Leitungen 21, 22 auf engstem Raum in dem Kanal 18 angeordnet sind. Dennoch können sie sich wegen ihrer frei hängenden, ausreichenden Länge in dem Kanal 18 verwinden, wenn die Tischplatte 11 gegenüber dem Tischgehäuse 12 verdreht wird. Die Länge der Leitungen ist hier ggf. größer als bei dem Ausführungsbeispiel gemäß Fig. 2.

Der Durchmesser der Adapterplatte 23 ist so gering, daß die Schraubverbindungen 43 und 44 sehr dicht nebeneinander liegen. Damit jetzt überhaupt noch eine Montage der Leitungen 21, 22 an der Adapterplatte 23 möglich ist, werden zunächst die äußeren Leitungen 22 über die Schraubverbindungen 44 in die Gewindebohrungen 45 eingeschraubt. Nachdem die vier äußeren Leitungen 22 befestigt sind, wird die zentrische Leitung 21 zunächst an das Anschlußstück 24 angeschraubt. Daraufhin wird dieses von unten in die Durchgangsbohrung 41 eingeschoben, bis der obere Anschlußzapfen 38 nach oben ausreichend vorsteht. Dann wird der nun in die Durchgangsbohrung 41 eingefügte Bolzenkörper 37 ggf. verklebt, woraufhin eine Bohrung gesetzt wird, in die der Stift 42 eingeschoben wird. Auf diese konstruktiv sehr einfache Weise können insgesamt fünf Leitungen 21, 22 auf engstem Raum von unten an dem Adapterteller 23 befestigt werden. Diese Leitungen werden nun von oben in den Kanal 18 eingefädelt und dieser dann durch die Adapterplatte 23 verschlossen. Daraufhin wird die Adapterplatte 23 über die Maschinenschrauben 33 fest an die Tischplatte 11 angeschraubt.

Soll eine der Leitungen 21, 22 ausgewechselt werden, so müssen lediglich die Maschinenschrauben 33 gelöst werden, damit die Adapterplatte 23 mit den daran hängenden Leitungen 21, 22 nach oben hochgezogen werden kann, so daß die Schraubverbindungen 43, 44 zugängig sind.

## Patentansprüche

1. Werkzeugmaschine mit einem Drehtisch (10), der eine gegenüber einem Maschinengestell (13) um eine Drehachse (15) verschwenkbare Tischplatte (11) aufweist, auf deren Oberseite (17) von unterhalb der Tischplatte (11) kommende Leitungen (21, 22) führen, die mit raumfesten Versorgungsanschlüssen verbunden sind, wobei die Leitungen (21, 22) über nach unten weisende Anschlußstücke (24, 25, 26), die mit der Tischplatte (11) in deren mittlerem Bereich drehfest verbunden sind, von unten an der Tischplatte (11) befestigt sind, dadurch gekennzeichnet, daß die Anschlußstücke (24, 25, 26) an einem Adapterteller (23) befestigt sind, der von oben auf einen in der Oberseite (17) der Tischplatte (11) mündenden, zentralen Kanal (18) aufgesetzt ist, in den die Anschlußstücke (24, 25, 26) hineinragen, und daß die Leitungen (21, 22) frei nach unten hängen.

2. Werkzeugmaschine nach Anspruch 1, dadurch gekennzeichnet, daß zumindest eine der Leitungen (21, 22) eine derartige frei hängende Länge aufweist, die beim Hin- und Herdrehen der Tischplatte (11) ein Verwinden der Leitung (21, 22) zuläßt.

3. Werkzeugmaschine nach Anspruch 1 oder Anspruch 2, dadurch gekennzeichnet, daß zumindest ein Anschlußstück (25) eine Drehkupplung (31) umfaßt.

4. Werkzeugmaschine nach einem der Ansprüche 1 bis 3, dadurch gekennzeichnet, daß eine erste Leitung (21) etwa zentrisch zu der Drehachse (15) verläuft und weitere Leitungen (22) vorzugsweise symmetrisch zu der ersten Leitung (21) angeordnet sind.

5. Werkzeugmaschine nach einem der Ansprüche 1 bis 4, dadurch gekennzeichnet, daß der Adapterteller (23) eine zentrische Durchgangsbohrung (41) aufweist, in die für eine zentrisch zu der Drehachse (15) verlaufende Leitung (21) ein Anschlußstück (24) eingefügt ist, das einen fest in der Durchgangsbohrung (41) sitzenden, zylindrischen Bolzenkörper (37) mit endseitigen Anschlußzapfen (38, 39) aufweist.

6. Werkzeugmaschine nach den Ansprüchen 4 und 5, dadurch gekennzeichnet, daß die Anschlußstücke (25, 26) der weiteren Leitungen (22) Drehkupplungen (31) umfassen, die von unten über eine Schraubverbindung (32) an dem Adapterteller (23) befestigt sind.

7. Werkzeugmaschine nach Anspruch 5 oder 6, dadurch gekennzeichnet, daß der Bolzenkörper (37) mit dem Adapterteller (23) verstiftet ist.

8. Werkzeugmaschine nach Anspruch 7, dadurch gekennzeichnet, daß parallel zu der Drehachse (15) von oben ein Stift (42) in den Adapterteller (23) eingeschoben ist, der etwa je zur Hälfte in dem Bolzenkörper (37) und dem Adapterteller (23) sitzt.

9. Werkzeugmaschine nach einem der Ansprüche 5 bis 8, dadurch gekennzeichnet, daß der Bolzenkörper (37) in die Durchgangsbohrung (41) eingeklebt ist.

## Claims

1. A machine tool having a turntable (10) with a table plate (11) that is pivotable with respect to a machine frame (13) about a rotation axis (15), lines (21, 22) connected to stationary supply connections and coming from beneath said table plate (11) leading onto an upper side (17) of said table plate (11), said lines (21, 22) being connected from beneath to the table plate (11) via downwardly pointing connector pieces (24, 25, 26) that are joined nonrotatably to said table plate (11) in the central region thereof, characterized in that the connector pieces (24, 25, 26) are attached to an adaptor plate (23) that is placed from above onto a central conduit (18) opening into the upper side (17) of the table plate (11), the connector pieces (24, 25, 26) projecting into said conduit, and that the lines (21, 22) are hanging freely downward.

2. The machine tool of claim 1, characterized in that at least one of said lines (21, 22) has such a freely hanging length that allows twisting of the line (21, 22) as the table plate (11) rotates back and forth.

3. The machine tool of claim 1 or claim 2, characterized in that at least one connector piece (25) comprises a rotary coupling (31).

4. The machine tool of any of claims 1 - 3, characterized in that a first line (21) extends approximately centeredly with respect to the rotation axis (15), and that further lines (22) are arranged preferably symmetrically with respect to the first line (21).

5. The machine tool of any of claims 1 - 4, characterized in that the adaptor plate (23) has a centered through orifice (41) into which is inserted a connector piece (24) for a line (21) running centeredly with respect to the rotation axis (15), said connector piece having a cylindrical stud element (37) that has connection stems (38, 39) on its ends and sits tightly in the through orifice (41).

6. The machine tool of claims 4 and 5, characterized in that the connector pieces (25, 26) of the further lines (22) comprise rotary couplings (31) that are attached to the adaptor plate (23) from below via a screw-on connection (32).

7. The machine tool of claim 5 or claim 6, characterized in that the stud element (37) is secured to the adaptor plate (23) by pinning.

8. The machine tool of claim 7, characterized in that a pin (42) which sits approximately half in the stud element (37) and half in the adaptor plate (23) is inserted from above into the adaptor plate (23) parallel to the rotation axis (15).

9. The machine tool of any of claims 5 - 8, characterized in that the stud element (37) is adhesively bonded into the through orifice (41).

## Revendications

1. Machine-outil avec une table tournante (10) qui comporte un plateau de table (11) qui peut pivoter par rapport à un bâti (13) de la machine, autour d'un axe de rotation (15) et à la face supérieure (17) duquel mènent des conduites (21, 22) qui proviennent de dessous le plateau de table (11) et qui sont reliées à des branchements d'alimentation fixes, les conduites (21, 22) étant reliées solidairement en rotation au plateau de table (11), dans sa partie centrale, par des raccords (24, 25, 26) dirigés vers le bas, et étant fixées au plateau de table (11) à partir du bas, caractérisée en ce que les raccords (24, 25, 26) sont fixés à un plateau d'adaptateur (23) qui est placé, à partir du haut, sur un canal central (18) débouchant dans la face supérieure (17) du plateau de table (11), canal dans lequel pénètrent les raccords (24, 25, 26), et en ce que les conduites (21, 22) pendent librement vers le bas.

2. Machine-outil selon la revendication 1, caractérisée en ce qu'au moins l'une des conduites (21, 22) présente une longueur pendant librement qui autorise une torsion de la conduite (21, 22) lorsque le plateau de table (11) tourne dans un sens et dans l'autre.

3. Machine-outil selon la revendication 1 ou la revendication 2, caractérisée en ce qu'au moins un raccord (25) comprend un accouplement tournant (31).

4. Machine-outil selon l'une des revendications 1 à 3, caractérisée en ce qu'une première conduite (21) s'étend de manière sensiblement centrée par rapport à l'axe de rotation (15) et d'autres conduites (22) sont disposées de préférence symétriquement par rapport à la première conduite (21).

5. Machine-outil selon l'une des revendications 1 à 4, caractérisée en ce que le plateau d'adaptateur (23) présente un trou traversant (41) centré dans lequel est inséré un raccord (24), destiné à une conduite (21) s'étendant de manière centrée par rapport à l'axe de rotation (15), lequel raccord présente un corps de goujon (37) cylindrique, ajusté fixement dans le trou traversant (41), avec des embouts de raccordement (38, 39) terminaux.

6. Machine-outil selon les revendications 4 et 5, caractérisée en ce que les raccords (25, 26) des autres conduites (22) comprennent des accouplements tournants (31) qui sont fixés au plateau d'adaptateur (23), à partir du bas, par une liaison vissée (32).

7. Machine-outil selon la revendication 5 ou 6, caractérisée en ce que le corps de goujon (37) est chevillé sur le plateau d'adaptateur (23).

8. Machine-outil selon la revendication 7, caractérisée en ce qu'une tige (42), qui est placée environ pour moitié dans le corps de goujon (37) et pour moitié dans le plateau d'adaptateur (23), est introduite à partir du haut dans le plateau d'adaptateur (23).

9. Machine-outil selon l'une des revendications 5 à 8, caractérisée en ce que le corps de goujon (37) est collé dans le trou traversant (41).
